# EUROPEAN PATENT APPLICATION

(11) **EP 2 924 689 A1**
(43) Date of publication of application: **30.09.2015**
(21) Application number: 12888872.4
(22) Date of filing: 26.11.2012
(51) Int. Cl.: G21C 1/03, G21C 3/28

(54) **NUCLEAR REACTOR**

(71) Applicant: Joint Stock Company "Akme-Engineering", Moscow 115035 (RU)
(72) Inventor: TOSHINSKY, Georgy Iliich, Kaluzhskaya oblast Obninsk 249033 (RU)
(74) Representative: Isarpatent
(86) International application number: PCT/RU2012/000980
(87) International publication number: WO 2014/081333

(57) **Abstract**

A nuclear reactor comprising a housing having disposed therein an active region that contains a bundle of rod-type fuel elements enclosed in a tubular shell and submerged in a primary coolant that circulates between the active region and at least one heat exchanger. In order to reduce the level of pressure of gaseous fission fragments accumulating below the fuel element shell and to enable the most uniform possible distribution of the velocity field of the primary coolant at the inlet to the active part of the fuel elements, said fuel elements are provided in their upper parts with active portions, which are filled with fuel, and hollow working portions, which are situated below said active portions.

## Description

The invention relates to the field of nuclear power engineering, more specifically to designs of fast neutron nuclear reactors, in particular those of pool type with a heavy liquid-metal coolant.

A nuclear reactor with a liquid-metal coolant is known that comprises a bundle of fuel elements arranged in a housing closed by a removable cover, said elements being fixed by a meshed holder. Each fuel element consists of a lower portion, an intermediate portion and an upper portion. The intermediate portion and the upper portion are formed by fuel elements of annular shape that are encased in a tubular casing and allow passage of gaseous fission fragments. The lower portion is formed by fuel elements in the shape of solid balls, since the requirements to provision a path for gaseous fission fragments are not so high for the lower portion. (GB 2163888, 1986).

The analogous solution closest to the claimed invention is a nuclear reactor, in particular that of pool type, accommodating a core comprising a bundle of fuel elements submerged into a primary circuit coolant circulating between the core and at least one heat exchanger. The fuel elements extend along corresponding parallel longitudinal axes and have corresponding active sections disposed in the lower ends of the fuel elements and submerged into a primary circuit coolant, thus forming a core, and corresponding work sections that are disposed above the active sections (WO2009040644, 2009).

This closest analogous solution has two essential drawbacks.
1) The arrangement of the fuel element work sections above the active sections results in that the work sections, in which volume gaseous fission fragments (xenon and krypton isotopes) are mainly accumulated, are washed by the coolant having a temperature corresponding to that at the core outlet and being significantly higher than a coolant temperature at the core inlet, which leads to raising pressure of a gas acting on the fuel element sealed casing and on mechanical stresses therein. In order to reduce gas pressure and mechanical stresses in the casing, it is necessary, subject to other equal conditions, to increase a length of the work section, which results in higher hydraulic resistance of the core, increased power inputs required for pumping the coolant, the necessity of increasing a height of the reactor housing as well as in lower performance.
2) In a case of possible failures in the normal operation conditions, which may occur after ingress of foreign objects in the core inlet, coolant velocity distribution in the core will become irregular, which will result in a rise of fuel element temperature in those core parts where the coolant velocity and flow rate are reduced. In order to prevent a fuel element temperature from rising inadmissibly, in a case such a rise is detected, it is required to reduce the reactor power, which will result in its poorer performance, otherwise the fuel elements will be damaged, which will lead to a radiation accident.

The objective of the invention is to ensure reliability and safety of a nuclear reactor, in particular a nuclear reactor of pool type with a liquid-metal coolant.

To eliminate the above-said drawbacks of the closest analogous solution, it is hereby proposed to dispose the fuel element section without fuel (hollow work section) below its active section (active fuel section) in a nuclear reactor, in particular a nuclear reactor of pool type, preferably with a liquid-metal coolant, which core comprises a bundle of fuel elements submerged into the primary circuit coolant circulating between the core and at least one heat exchanger.

The technical effect of the invention consists in, first, ensuring, if possible, a low pressure level of gaseous fission fragments accumulating within fuel element casings by lowering a temperature of a gas present in the lower, cold section of a fuel element, which low level determining the service life according to the long-term strength criterion, and, second, ensuring as uniform distribution of the velocity field of the primary circuit coolant in the active (fuel) sections of the fuel elements as possible, including cases of possible foreign matter ingress into the inlet cross-section of the core, due to transverse mass transfer of the coolant in the core lower work portion performing the function of a throttling grid.

The invention is illustrated by the drawings, wherein:

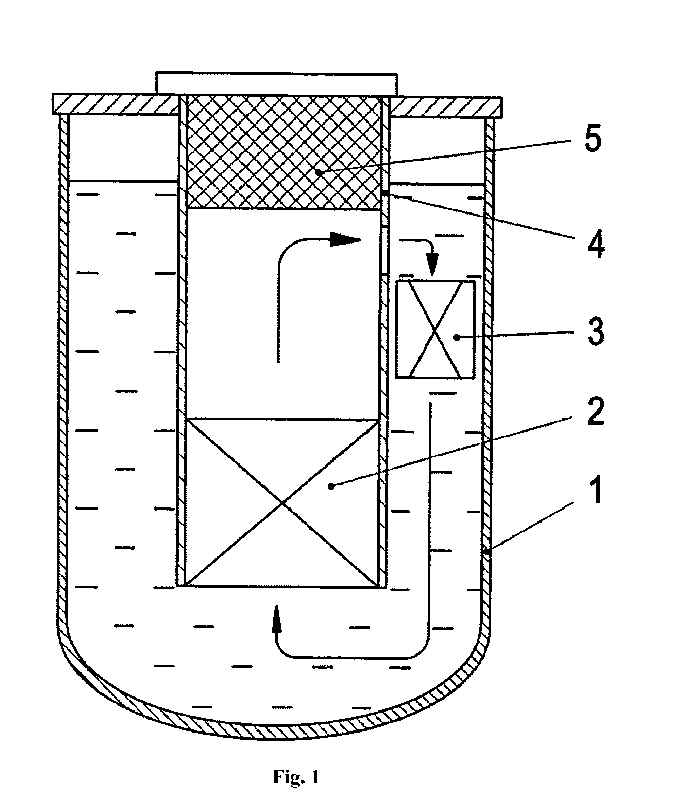

Fig. 1 shows a diagrammatic view of the nuclear reactor (without a pump).

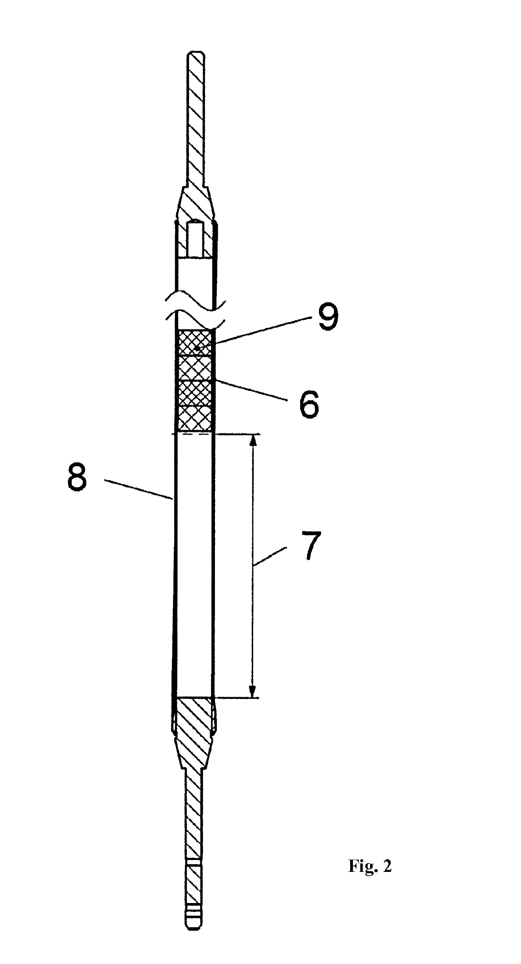

Fig. 2 shows a cross-sectional view of a fuel element.

The essence of the invention is explained below on a specific example that does not cover all possible embodiments of the invention.

A nuclear reactor, in particular a nuclear reactor of pool type, preferably with a liquid-metal coolant, comprises a cylindrical housing (1) accommodating a core (2), at least one heat exchanger (3) and at least one pump. Also, a nuclear reactor may be contemplated, wherein no pump (pumps) is used, and a coolant is circulated due to natural convection.

The heat exchanger (3) and the pump (if used) are arranged in an annular space formed by the cylindrical housing (1) and a cylindrical separating shell (4). The core (2) is disposed within the cylindrical separating shell (4), and a shielding plug (5) is arranged on the top.

The core (2) comprises, to facilitate assembly and disassembly, fuel assemblies consisting of a bundle of fuel elements and a bottom nozzle. The fuel elements are connected therebetween in a bundle by spacer grids and a lower supporting grid fixed on the bottom nozzle of the fuel assembly. The spacer grids and the lower supporting grid retain the mutual arrangement of the fuel elements in a cross section, due to which uniform distribution of the coolant in a cross-section of the core (2) is ensured and the possibility of hydrodynamic instability is reduced when the coolant flows around the fuel elements. At the same time, the structure of fastening the fuel elements allows their axial movements for the purpose of eliminating mechanical stresses that arise due to differences in fuel element temperature elongations.

A fuel element of rod type has a cylindrical shape formed by a tubular casing which hollow space accommodates fuel, i.e., fuel pellets.

The fuel elements extend along the corresponding longitudinal axes of the fuel assembly and have active (fuel) sections(6) at their upper ends. The lower portion of a fuel element forms hollow (work) sections (7) of its tubular casing (8) that do not contain fuel. The hollow (work) sections (7) are disposed lower than the active (fuel) sections (6) of the fuel elements. The fuel elements are submerged into the primary circuit coolant and form the core (2). Fuel pellets (9) are held by retainers (not shown on the figure) at a set level in the upper portion of the tubular casing (8), wherein rods (pellets) (9) made of a material used for end neutron reflectors or a breeder material (e.g., U-238 may be disposed.

During the process of the reactor operation a liquid-metal coolant of the primary circuit, for example lead or a lead-bismuth eutectic, as transferred by a pump (if used) or circulating due to natural convection, moves through the core (2) and the heat exchanger (3) wherein the heating coolant of the primary circuit transfers heat to the secondary circuit coolant.

Pressure of gaseous fission products accumulated beneath the casing of the fuel element is lower than that of fuel elements known in the art. This is because the gaseous fission products are accumulated in the hollow work section of the fuel element, namely in the hollow (work) sections (7). Furthermore, irregularities in the coolant velocity field of the primary circuit coolant is eliminated upon passing of a "cold" coolant through the bundle of fuel elements connected by the spacer grids. A more uniform coolant flow will come to the active (fuel) sections (6) of the fuel elements, and this allows to avoiding overheating of the active (fuel) sections (6) of the fuel elements.

## Claims

1. A nuclear reactor, comprising a housing accommodating a core comprising a bundle of fuel rods, the fuel rod having a tubular casing and submerged into a coolant of a primary circuit, said coolant circulating between the core and an at least one heat exchanger, ***characterized in that*** the fuel rods in their upper portions are provided with active sections filled with fuel, and **in that** the fuel rods are provided with hollow work sections arranged below the active sections.
